# EUROPEAN PATENT APPLICATION

(11) **EP 4 478 467 A1**
(43) Date of publication of application: **18.12.2024**
(21) Application number: 23189558.2
(22) Date of filing: 03.08.2023
(51) Int. Cl.: H01M 10/04, H01M 10/052, H01M 10/42, H01M 10/44, H01M 10/54, H01M 10/625, H01M 10/647, H01M 10/6556, H01M 10/6568, A62C 99/00, B09B 3/35, B30B 15/34, H02J 7/00, A62D 1/00

(54) **BATTERY CELL DISCHARGE SYSTEM AND METHOD OF DISCHARGING CELLS**

(30) Priority: 15.06.2023 US 202318210302
(71) Applicant: Ascend Elements, Inc., Westborough, MA 01581 (US)
(72) Inventor: DAVIS, Gregory, Westborough, 01581 (US); DANIELSON, Douglas, Westborough, 01581 (US); FAN, Jacky, Westborough, 01581 (US)
(74) Representative: Greaves Brewster LLP

(57) **Abstract**

Forced discharge of Li-ion batteries for recycling extracts residual electrical energy from the battery cells to avoid sudden and unexpected release of residual energy during recycling. A battery cell containment device applies a physical restraint to one or more battery cells, and engages positive and negative terminals on the cells for electrical communication. A cooling medium flows through the containment for thermal transfer of excess heat generated during the discharge. Depending on the residual charge remaining in the battery cells, excess electrical energy is discharged thought the positive and negative terminals to a state of zero charge. A reverse voltage forces current through the anode to being the battery to a zero-energy state. The reverse voltage continues until internal short circuits resulting from degradation of current collectors in the battery render it benign.

## Description

### BACKGROUND

Lithium-ion (Li-ion) batteries are a preferred chemistry for secondary (rechargeable) batteries in high discharge applications such as electric vehicles (EVs) and power tools where electric motors are called upon for rapid acceleration. Li-ion batteries include a charge material, conductive powder, and binder applied to or deposited on a current collector, typically a planar sheet of copper or aluminum. The charge material includes anode charge material, typically graphite or carbon, and cathode charge material, which includes a predetermined ratio of metals such as lithium, nickel, manganese, cobalt, aluminum, iron and phosphorous, defining a so-called "battery chemistry" of the Li-ion cells. Recycling of the Li-ion batteries recovers large amounts of charge material metals that would otherwise need to be sourced from controlled sources, typically as a result of mining and refining.

### SUMMARY

Forced discharge of Li-ion batteries such as EV (electric vehicle) battery cells and packs precedes physical dismantling and agitation of the cells in anticipation for recycling of battery materials, including charge material metals, carbon and graphite, and current collectors such as aluminum and copper. Forced discharge extracts residual electrical energy from the battery cells to avoid sudden and unexpected release of residual energy during recycling. A containment device applies a physical restraint to one or more battery cells and engages positive and negative terminals on the battery for electrical communication. The containment device forms a rigid enclosure with a clamping top and bottom and physically compresses the battery cells to mitigate any gaseous product formation from the forced discharge, which might result in a buildup of pressure in the battery cell. A cooling medium flows through the containment device for thermal transfer of any excess heat generated during the discharge. Depending on the residual charge remaining in the battery cells, excess electrical energy is discharged through the positive and negative terminals to a state of zero charge. A reverse voltage is applied to effectively force current through the anode and thus forcing the polarity to reverse, bringing the battery to a zero-energy state. The reverse polarity incurs short circuits resulting from degradation of current collectors in the battery, rendering it benign. A suppression port in the containment device allows flooding with a fire suppressant in the event of a thermal runaway or fire during the forced discharge.

In more detail, Li-ion batteries for EVs reside in a battery pack, often mounted to the vehicle undercarriage. Each battery pack includes a number of interconnected battery cells, each including a structured arrangement of cathode and anode materials leading to positive and negative terminals. For configurations herein battery recycling of Li-ion cells involves physically dismantling the battery packs to obtain the individual battery cells therein for recycling, which usually involves crushing, shredding and grinding to generate a granular mass (i.e., a black mass) of the battery cell contents.

Unfortunately, conventional approaches to battery cell recycling suffer from the shortcoming that the battery packs in the recycling stream have an unknown state of charge, depending on the donor vehicle, age, and last usage. Physical crushing and shredding of battery packs and/or cells can trigger a sudden release of residual electrical energy, leading to an explosion or fire. Accordingly, configurations herein substantially overcome the shortcoming of battery dismantling by providing a forced discharge cell containment device to quickly transfer residual electrical energy from a battery cell in a controlled manner, suppress excess gaseous or exothermic reactions, render the battery cell benign or inert, and invoke fire suppression via a flooding port in the unlikely event of excessive discharge.

In further detail, configurations herein provide a battery cell containment device for fast, efficient discharge including a top plate positioned above a bottom plate to compress at least one battery cell therebetween, and a coolant system comprising an inlet, an outlet, and a coolant channel and configured to circulate a coolant through the top plate, the bottom plate, or both. Thermal and pressure increases (gaseous expansion) are therefore moderated, and a fire suppression system is configured to supply a fire suppressant to the compressed battery cell in the unlikely event of a nonconforming cell encountering an adverse result to discharging. Electrical probes accessible from the exterior are positioned to provide electrical contact to terminals of the compressed battery cell for applying and controlling discharge voltage.

The top plate and the bottom plate may preferably comprise a cell cavity configured to contain the compressed battery cell.

The coolant may preferably be water.

The fire suppressant may preferably be liquid nitrogen or water.

### BRIEF DESCRIPTION OF THE DRAWINGS

The foregoing and other features will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles of the invention.
Fig. 1 is a context diagram of a recycling environment suitable for use with configurations herein;
Fig. 2 is a graph of battery cell characteristics during discharge;
Fig. 3 is a side view of the battery cell containment device used for forced discharge;
Fig. 4 is a perspective view of a configuration of the containment device of Fig. 3; and
Fig. 5 is a flowchart of forced discharge operation using the containment device of Figs. 3 and 4.

### DETAILED DESCRIPTION

Depicted below is a method for discharging a battery cell to safe levels for recycling using a containment device for discharge and protection in the unexpected event of an adverse response by the battery cell.

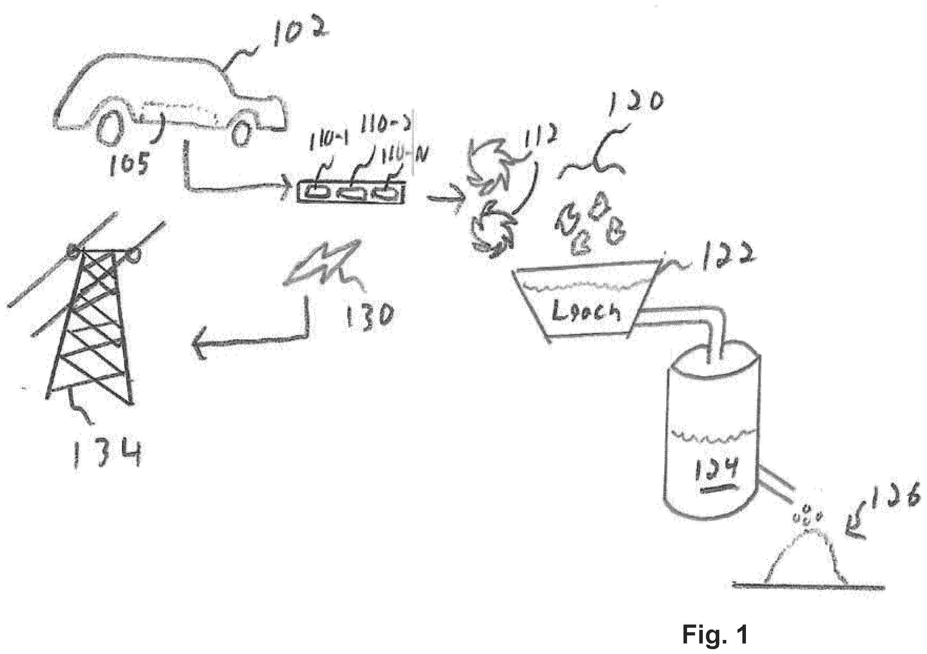

Fig. 1 is a context diagram of a recycling environment 100 suitable for use with configurations herein. Referring to Fig. 1, in a Li-ion battery recycling stream, an end-of-life battery pack 105 is obtained from a vehicle 102. The battery pack, typically having a physical case shaped to attach to the underside of the vehicle 102 according to manufacturer specifications, includes a plurality of interconnected battery cells 110-1..110-N (110 generally), often arranged in modules to optimize placement and dimensions in the full battery pack 105. Typically, in order to release the materials for recycling, the battery packs 105 and cells 110 therein are physically ground, shredded, and pulverized to release a granular assortment 120 of battery ingredients, sometimes referred to as a black mass. These ingredients provide valuable battery materials for recycling and often include nickel, manganese, cobalt, aluminum, lithium and graphite, although any suitable battery chemistry can be employed. In order to be efficient, black mass formation is a mechanically intensive process using shredders 112, grinding, and/or other physical agitation that incurs a randomness of contact between the materials in the battery packs. Due to the high energy density of the Li-ion battery, such contact can cause a sudden release of any excess residual electrical energy remaining in the battery cells 110. In conventional processes, a sudden release of heat, gases and fire can be somewhat unpredictable.

Once liberated, extraction of the granular assortment (black mass) 120, including cathode materials, anode materials, current collectors and casing materials, forms a leach solution 122 containing desirable charge material metals in a ratio that can be adjusted as needed, as disclosed in US Patent No. 9,834,827 and continuations thereof, incorporated by reference. The leach solution 122 undergoes a coprecipitation reaction 124 for recovering recycled cathode material precursor 126 (pCAM, or precursor Cathode Active Material), which is then sourced for new, recycled battery cells. Typically, the precursor is a hydroxide form of the metals discussed above, based on the battery chemistry of the individual cells and pack, which can vary in the recycling stream.

It would be beneficial to fully discharge the battery cells prior to dismantling to mitigate the risk of a sudden or uncontrolled release of residual electrical energy. A forced discharge method as depicted below applies a reverse potential power supply to battery cells, rendering them in a benign state, and returns excess residual electrical energy 130 to the grid 134.

Without wishing to be bound by any particular theory, it is believed that overdischarging of the cell below 0% state of charge causes dissolution of the copper current collector, creating internal short circuits in the cell cathode and anode and dissipating the remaining cell energy as heat. The overdischarge process can be accelerated by using the forced discharge approach discussed herein in which a reverse potential power supply is attached to the cell that may accelerate the copper plating believed to be involved in creating the internal short circuits.

A predetermined calculation can estimate the amount of energy to be delivered by the reverse potential power supply. During delivery, the cell voltage and current is monitored, and the process is repeated if needed, until zero voltage and current has been achieved, and/or until a zero-energy state of the battery cell is reached.

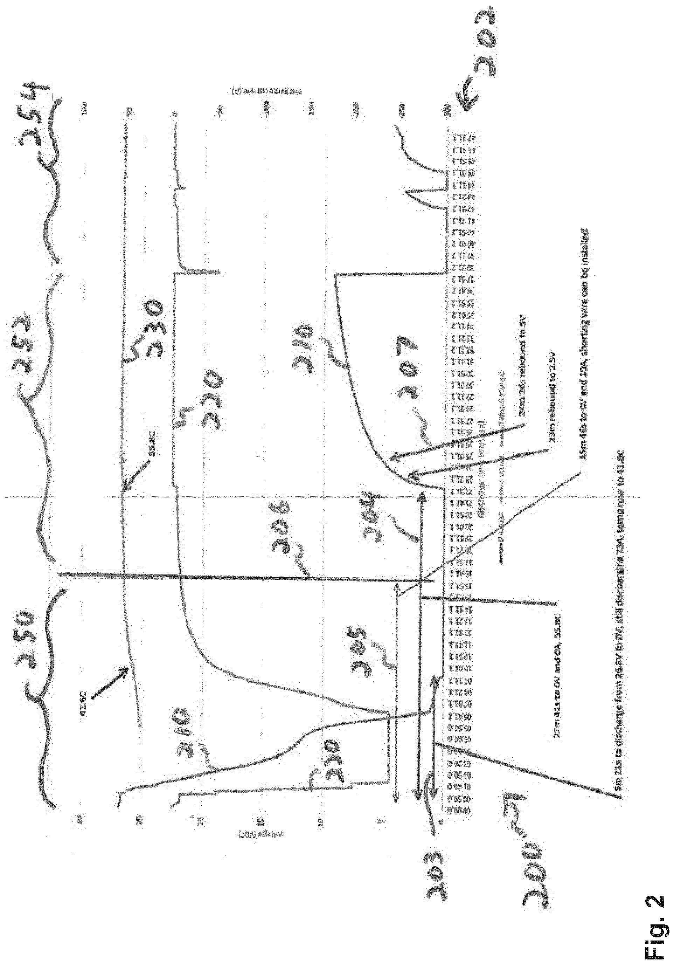

Fig. 2 is a graph 200 of battery cell characteristics during discharge. Referring to Figs. 1-2, battery cell characteristics of voltage 210, current 220, and temperature 230 of a discharging battery cell 110 are shown along a time axis 202 (horizontal). Conventional approaches to cell discharging require an excessive time of around 3 hours. For example, conventional approaches immerse the battery cell in an electrically conductive brine solution to offset temperature and drain the charge, which is a slow process and prone to failure if a battery cell ruptures and contaminates the brine with electrolyte.

Lithium-ion cells usually cycle between 100% and 0% state of charge. An individual battery cell still has an open circuit voltage of ~2.7 volts when at 0% state of charge and enough energy to create sparks and a fire risk when the cell is shredded during recycling operations. The configurations herein bring the stored energy in the battery cell below the 0% state of charge, down to a benign zero-energy state, discussed further below.

In Fig. 2, an example discharge drains a battery module from 26.8V to 0V, and the individual cells in the module from 3.5V to 0V, over a duration of 9 min. 21 s, as shown by arrow 203. Looking concurrently at voltage 210, the voltage drops when discharge current 220 remains constant, until the voltage approaches zero about 6 minutes after. In this example, the battery was discharged at about 250 amps and the voltage dropped to zero after 22m 41s at arrow 204, as the temperature 230 rose to 55.8°C. However, 2 minutes later, the voltage had rebounded to 5V, shown by arrow 207. Of note is the vertical line 206 at which the voltage is 0 and the current had leveled off at 10A. Configurations herein connect and apply a reverse polarity forced discharge current at this threshold, as the low voltage and modest current mitigate a sudden surge of electrical energy. Furthermore, a shorting wire can also be installed to ensure an end to the discharge process after 24m 26s (arrow 205), preventing the rebound voltage from presenting a potentially volatile battery state.

During this initial discharge period 250, excess energy may be directed to an inverter for distribution back out to grid 134. At interval 252, forced discharge occurs to reverse-bias the battery cell which is believed to induce breakdown of the cathode current collector by formation of dendrite-caused shorting of the copper current collector to render the cell benign, where rebound voltage is mitigated, at interval 254.

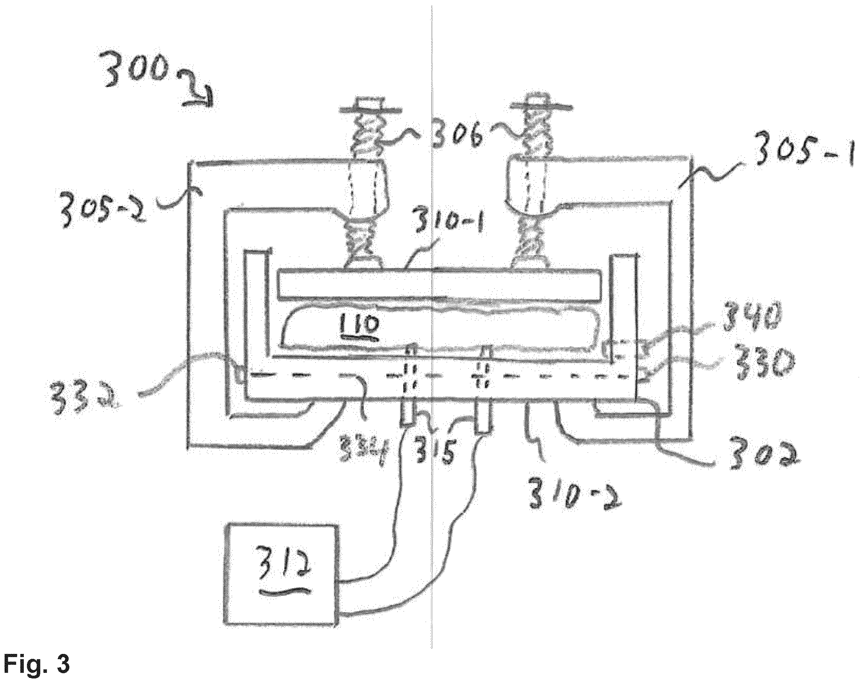

Fig. 3 is a side schematic view of a cell containment device 300 used in conjunction with a forced discharge process described herein. Referring to Figs. 1-3, discharge of individual pouch cells 110 to zero energy state can be done quickly and efficiently, such as in about 5 minutes and at a discharge current of 12C, by clamping one or more cells 110 between top plate 310-1 and bottom plate 310-2 (plates 310 generally and containment fixture 302 collectively) and discharging with an electronic load followed by forced discharge with a reverse polarity power supply 312 to a zero-energy state. One or both of plates 310 is provided with a coolant system and a fire suppression system. A clamp or hinge is configured to compress the battery cell between the top plate and the bottom plate. For example, clamps 305-1 and 305-2 secure an array of cells enclosed in containment fixture 302 to prevent a cell fire from spreading by allowing the containment fixture to be flooded with a fire suppressant to extinguish any fire. Electrical contact is made to cells through spring loaded electrical probes or terminals 315-1..315-2 which allow each cell to be electrically connected to the control system for discharging and also to be inspected for shorts or open defects by the control system before discharge, so that the defective cells can be removed from the process and deenergized using an alternate process. Individual electrical contacts allow the cell array to be connected in parallel or serial configuration by the control system.

Clamping and cooling the pouch cell duplicates the conditions when installed in an EV module and prevents a single unconstrained pouch cell from overheating, ballooning, and bursting, which releases hazardous electrolyte and VOCs (Volatile Organic Compounds). With the present device, battery cells can be discharged rapidly and safely. For example, a cell can be discharged in 5 minutes at a rate of 12C, which is substantially faster than a conventional 2C peak discharge rate specified by cell OEMs, while additionally the disclosed system provides containment in the rare event of a cell fire.

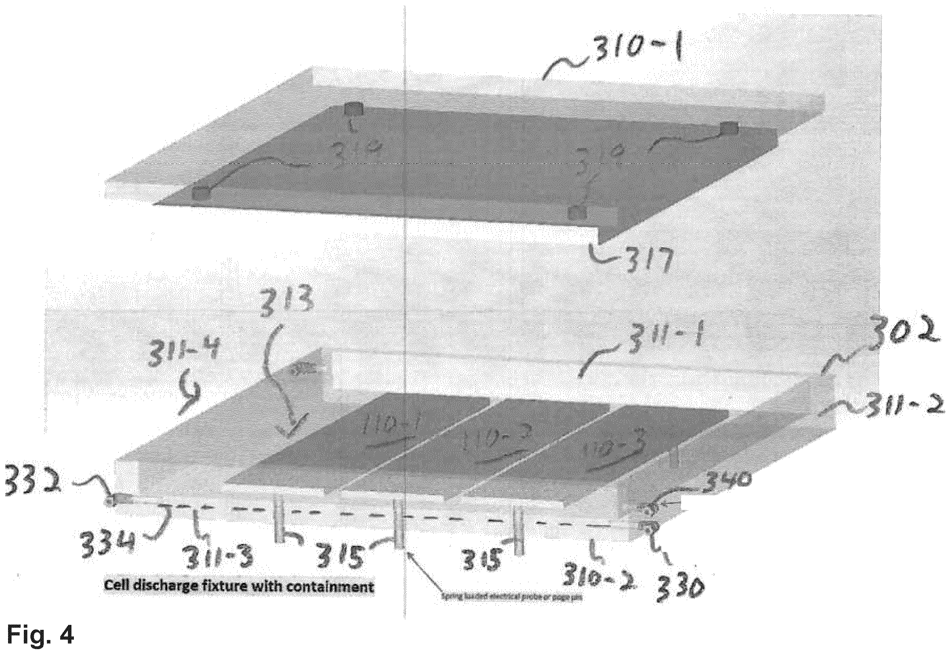

Fig. 4 is a perspective view of a specific configuration of the cell containment device of Fig. 3. Referring to Figs. 1-4, a battery cell containment fixture 302 includes a top plate 310-1 positioned above a bottom plate 310-2 to compress at least one battery cell 110 therebetween (three are shown as an example, 110-1, 110-2, and 110-3). The containment device further comprises a coolant system including an inlet 330, an outlet 332, and a coolant channel 334 configured to circulate a coolant within the top plate 310-1, the bottom plate 310-2, or both. For example, the coolant channel may provide a serpentine path for coolant circulation within the bottom plate. Similarly, a fire suppression system is configured to supply a fire suppressant to the compressed battery cell, typically via an inlet 340 for fluidic access to the cell(s) contained within the containment fixture 302. Both the coolant and the fire suppressant may be water, but the coolant preferably flows through the top and/or bottom plates, similar to a heat exchanger or radiator, while the fire suppressant inlet 340 directs suppressant flow into the interior of the fixture to immerse the battery cells. Electrical probes 315 are positioned to provide electrical contact to terminals of the compressed battery cell.

The containment device may further include one or more side plates 311-1..311-4 (311 generally) in contact with the top plate 310-1 and/or the bottom plate 310-2 for forming a cavity 313 containing the compressed battery cells 110. The containment fixture 302 therefore encapsulates the battery cells 110 for mitigating any volatile response by the battery cells 110. The side plates 311 can be adjustable/movable to provide direct contact with the compressed battery cell for maintaining a tight encapsulation. In addition, the top plate 310-1 and/or the bottom plate 310-2 may also include a fixed or adjustable cell cavity surface configured to contact and compress the battery cell. For example, an adjustable surface 317 may be a floating plate attached to the top plate by a plurality of springs 319 or other resilient mechanism to conform the cavity 313 to the battery cells. The bottom plate 310-2 may also define a cell cavity configured to contain the compressed battery cell.

From within the containment fixture 302 of cell containment device 300, contact pads or points aligned with the terminals on the battery cells 110 extend through the plate 310 for electrical communication with discharge connections. In the example configuration, the electrical probes 315 are positioned within the cell cavity 313 of the bottom plate and extend through the bottom plate 310-2, in a noninterfering manner with any coolant lines 334 or spring-loaded attachments or clamps used to compress and secure the plates 310 together. The electrical probes 315 may include spring loaded electrical contact pins for biasing the probes to form a good connection with the battery cells 110, as substantial amperage can be expected. As indicated above, electrical communication with the battery cells 110 in the containment fixture 302 of cell containment device 300 allows discharge, monitoring, and forced discharge of the cells therein as shown in Fig. 2.

Turning again to the fire and thermal management capabilities, a typical coolant for circulation through the coolant channel 334 such as tubes or vessels is water, which can connect to inlets and outlets 330, 332 via any suitable pumping apparatus. The coolant channel 334 may run in any suitable manner through the plates 310, such as a series of parallel linear runs or a serpentine "S" channel alternating side to side. The plates are preferably constructed of materials capable of withstanding the compressive forces while also providing sufficient heat transfer from the cells to the coolant. For example, aluminum construction of the plates and sides aids thermal transfer and non-combustability; copper would also provide excellent thermal properties. While the coolant flow runs through the plates 310 (and optionally through the sides 311), the fire suppression system supplies the fire suppressant through the top plate, the bottom plate, or both directly into the cavity 313 for drowning any fire or runaway reaction of the compressed battery cells 110. In sum, the cell containment device disclosed herein defines a complete compressed or clamped enclosure around the discharging battery cells 110 with fluid communication through internal channels 334 in the top and sides for thermal transfer, and fluid communication directly into the cavity 313 for fire suppression, using water, foam, inert gas/liquid such as nitrogen, or other suitable fire suppression fluid.

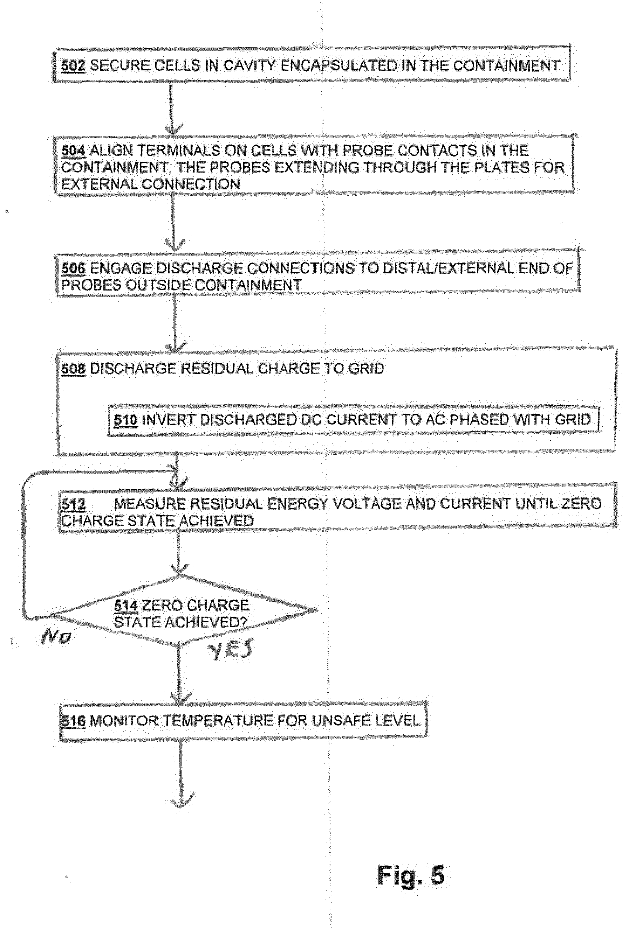

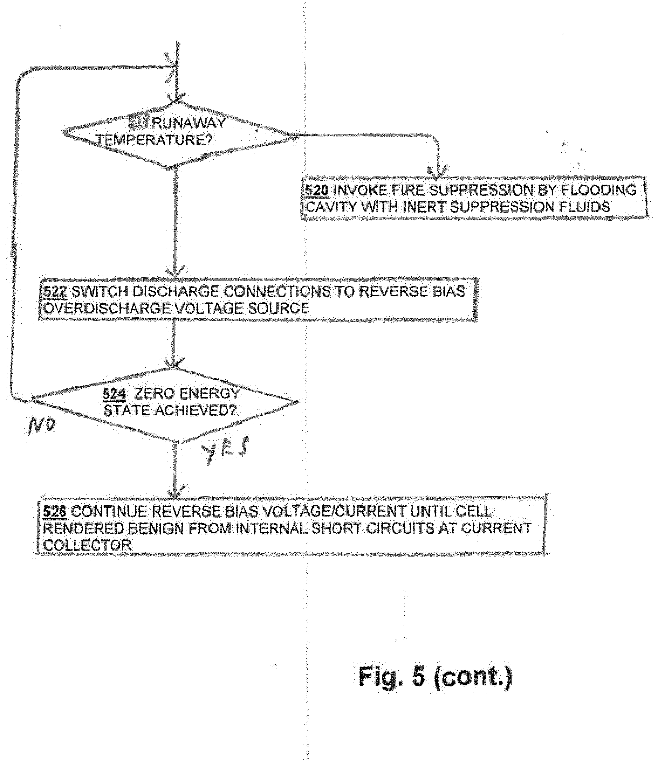

Fig. 5 is a flowchart 500 of forced discharge operation using the containment device of Figs. 3 and 4. Referring to Figs. 1-5, the method of discharging a battery cell via a reverse-bias overdischarge voltage includes, at step 502, securing cells 110 between a top plate and a bottom plate of the device, such as within the cavity 313, thereby being enclosed or encapsulated within the containment fixture 302 of the device. The containment fixture 302 encapsulates and secures the cells 110 while maintaining electrical communication with the battery cells from external probes or contacts. The terminals on the cells align with probe contacts in the containment device such that the probes 315 extend through the plates 310 for external connection, as depicted at step 504. Discharge connections are made to the distal/external end of the probes outside of the containment fixture of the device, as shown at step 506. In other words, the electrical connections external to the containment device pass through the plate and extend into contact with the battery cells.

Residual charge is released, such as to grid 134, to drain off an excess of electrical energy, as disclosed at step 508. This involves connecting an inverter to invert the discharged DC current to AC phased with the grid, depicted at step 510. During grid discharge, residual energy voltage and current are monitored until a zero charge state is achieved, as shown at step 512. A check is performed, at step 514, to determine if a zero-charge state has been achieved. The zero-charge state still retains appreciable, and possibly dangerous, electrical energy in the cells. In use, Li-ion batteries are not fully discharged, but rather charged and discharged between a 100% and 0% state of charge. While battery and vehicle manufacturers have discretion around cell parameters, a typical battery cell has around 4.5V at 100% state of charge, and a 0% state of charge exhibits about 2.5-2.7V. It is at this point that Li-ion batteries should be recharged to encourage cell longevity and maximize a number of charge cycles over the battery cell service life.

Concurrently with discharge, a temperature monitoring system measures the temperature of the compressed cells 110, as depicted at step 516, and adjusts coolant flow though inlet 330 accordingly. A check is performed, at step 518, for runaway temperatures, and fire suppression may be invoked by flooding cavity 313 with inert suppression fluids via fire suppression port 340, as depicted at step 520.

Upon attaining the zero-charge state, based on predetermined voltage and current characteristics at probes 315, the discharge connections are switched to the reverse bias overdischarge voltage source, as disclosed at step 522. This applies a higher voltage to the negative battery terminal and a lower voltage to the positive terminal, in reverse polarity to what a normal charge cycle would perform. The forced discharge commences at zero-charge state. The reverse polarity power supply 312 continues until a zero-energy state of the battery cells is achieved, based on the check at step 524. The reverse bias voltage/current continues until cell rendered benign from internal short circuits at the current collector, as depicted at step 526.

While the system and methods defined herein have been particularly shown and described with references to embodiments thereof, it will be understood by those skilled in the art that various changes in form and details may be made therein without departing from the scope of the invention encompassed by the appended claims.

## Claims

1. A battery cell containment device comprising
a top plate positioned above a bottom plate to compress at least one battery cell therebetween,
a coolant system comprising an inlet, an outlet, and a coolant channel and configured to circulate a coolant through the top plate, the bottom plate, or both,
a fire suppression system configured to supply a fire suppressant to the compressed battery cell, and
electrical probes positioned to provide electrical contact to terminals of the compressed battery cell.

2. The battery cell containment device of claim 1 further comprising one or more side plates in contact with the top plate or the bottom plate forming a cavity containing the compressed battery cell, preferably wherein the side plates are adjustable to contact the compressed battery cell.

3. The battery cell containment device of claim 1 or claim 2, wherein the top plate comprises a cell cavity configured to contain the compressed battery cell.

4. The battery cell containment device of any preceding claim, wherein the top plate comprises an adjustable surface to contact the compressed battery cell, preferably wherein the adjustable surface is a floating plate attached to the top plate by a plurality of springs.

5. The battery cell containment device of any preceding claim, wherein the bottom plate comprises a cell cavity configured to contain the compressed battery cell, preferably wherein the electrical probes are positioned within the cell cavity of the bottom plate.

6. The battery cell containment device of any preceding claim, wherein the electrical probes are spring loaded electrical contact pins.

7. The battery cell containment device of any preceding claim, wherein the coolant system circulates the coolant within the bottom plate from the inlet to the outlet through the channel.

8. The battery cell containment device of any preceding claim, wherein the fire suppression system supplies the fire suppressant through the top plate, the bottom plate, or both to the compressed battery cell, preferably wherein the fire suppression system supplies the fire suppressant thorough the bottom plate.

9. The battery cell containment device of any of claims 5 to 8, wherein the fire suppression system supplies the fire suppressant into the cell cavity of the bottom plate.

10. The battery cell containment device of any preceding claim, further comprising a clamp or hinge configured to compress the battery cell between the top plate and the bottom plate.

11. The battery cell containment device of any preceding claim, further comprising a temperature monitoring system to measure the temperature of the compressed cell.

12. A battery cell discharge system comprising a battery cell containment device according to any preceding claim, and a reverse-bias over-discharging device.

13. A method of discharging a battery cell, comprising:
positioning at least one battery cell within a battery cell containment device comprising:
a top plate positioned above a bottom plate to compress at least one battery cell therebetween,
a coolant system comprising an inlet, an outlet, and a coolant channel and configured to circulate a coolant through the top plate, the bottom plate, or both,
a fire suppression system configured to supply a fire suppressant to the compressed battery cell; and
electrical probes positioned to provide electrical contact to terminals of the compressed battery cell,
compressing the battery cell between the top plate and the bottom plate, and
applying a reverse-bias overdischarge voltage to the terminals for discharging the battery cell to a zero-energy state.

14. The method of claim 13 further comprising:
engaging the electrical probes for directing a current flow from the compressed battery cell to an electrical distribution grid; and
passing the current flow through an inverter for generating an AC (Alternating Current) signal prior to passing the current flow to the electrical distribution grid.

15. The method of claim 13 or 14 further comprising:
determining when the compressed battery cell has attained a zero state of charge based on current and voltage readings; and
upon attaining the zero state of charge, applying the reverse-bias overdischarge voltage to the compressed battery cell to achieve a zero energy state resulting from internal degradation of current collectors in the compressed battery cell.
